# EUROPEAN PATENT APPLICATION

(11) **EP 3 007 064 A1**
(43) Date of publication of application: **13.04.2016**
(21) Application number: 14878618.9
(22) Date of filing: 16.01.2014
(51) Int. Cl.: G06F 9/45

(54) **METHOD FOR LOADING CODE AND NETWORK APPARATUS**

(71) Applicant: Huawei Technologies Co., Ltd., Longgang District Shenzhen, Guangdong 518129 (CN)
(72) Inventor: CHEN, Hongfei, Shenzhen Guangdong 518129 (CN); GONG, Jun, Shenzhen Guangdong 518129 (CN)
(74) Representative: Epping - Hermann - Fischer
(86) International application number: PCT/CN2014/070739
(87) International publication number: WO 2015/106421

(57) **Abstract**

An embodiment of the present invention provides a code loading method, including: obtaining, by a control plane of a network apparatus, a process to be executed by a forwarding plane of the network apparatus and code that executes the process, where the code is described by using a high-level programming language; determining, by the control plane of the network apparatus, that service configuration information of the network apparatus corresponds to the code; compiling, by the control plane of the network apparatus, the code to generate compiled code; and loading, by the control plane of the network apparatus, the compiled code to the forwarding plane of the network apparatus. In addition, an embodiment of the present invention further provides a corresponding network apparatus. A new service may be deployed by using the foregoing technical solutions, which helps meet a requirement for a new service.

## Description

### TECHNICAL FIELD

The present invention relates to the communication field, and in particular, to a code loading method and a network apparatus.

### BACKGROUND

Network apparatuses (such as a router and a switch) are provided by a network apparatus supplier. The network apparatus supplier may be Huawei or Cisco. A network apparatus user is a network apparatus operator. The network apparatus operator may be China Mobile Communications Corporation (China Mobile Communications Corporation) or Verizon Communications (Verizon Communications). The network apparatus provided by the network apparatus supplier may include code that executes a service. For example, a router may include code that executes Internet Protocol (Internet Protocol, IP for short) forwarding. Therefore, after the router receives an IP packet, the router may forward the IP packet according to the code that executes the IP forwarding. With development of technologies, a requirement for a new service is put forward. For example, a network apparatus operator expects that a network apparatus is capable of deploying a new service. The new service may be operation, administration and maintenance (operation, administration and maintenance, OAM for short). Conventional technologies cannot satisfyingly meet the requirement for the new service.

### SUMMARY

Embodiments of the present invention provide a code loading method and a network apparatus. A new service may be deployed by using technical solutions provided by the embodiments of the present invention, which helps meet a requirement for a new service.

According to a first aspect, a code loading method is provided, including:
obtaining, by a control plane (control plane) of a network apparatus, a process (process) to be executed by a forwarding plane (forwarding plane) of the network apparatus and code that executes the process, where the code is described by using a high-level programming language (programming language);
determining, by the control plane of the network apparatus, that service configuration information of the network apparatus corresponds to the code;
compiling, by the control plane of the network apparatus, the code to generate compiled code (compiled code); and
loading, by the control plane of the network apparatus, the compiled code to the forwarding plane of the network apparatus.

In the foregoing technical solutions, a control plane of a network apparatus obtains a process and code that executes the process. The control plane of the network apparatus determines that service configuration information corresponds to the code. The control plane of the network apparatus compiles the code to generate compiled code. The control plane of the network apparatus loads the compiled code to a forwarding plane of the network apparatus. A new service may be executed by the compiled code that is loaded to the forwarding plane of the network apparatus. Therefore, a new service may be deployed by using the foregoing technical solutions, which helps meet a requirement for a new service.

In a first possible implementation manner of the method provided by the first aspect, the method further includes:
obtaining, by the control plane of the network apparatus, a location of a field that is to be matched by the forwarding plane of the network apparatus.

According to the first possible implementation manner of the method provided by the first aspect, in a second possible implementation manner of the method provided by the first aspect,
after the obtaining, by the control plane of the network apparatus, a location of a field that is to be matched by the forwarding plane of the network apparatus, the method further includes:
translating, by the control plane of the network apparatus, the location of the field to generate an instruction that triggers a search engine of the forwarding plane of the network apparatus to execute a matching operation.

According to the first aspect, or the first possible implementation manner of the method provided by the first aspect, or the second possible implementation manner of the method provided by the first aspect, in a third possible implementation manner of the method provided by the first aspect,
a variable in the code includes a value of a field in a packet or a value of a register.

According to the first aspect, or the first possible implementation manner of the method provided by the first aspect, or the second possible implementation manner of the method provided by the first aspect, or the third possible implementation manner of the method provided by the first aspect, in a fourth possible implementation manner of the method provided by the first aspect,
the code is used to access a function or a coprocessor.

According to a second aspect, a network apparatus is provided, including: a control plane and a forwarding plane, where
the control plane includes:
a first obtaining unit, configured to obtain a process to be executed by the forwarding plane of the network apparatus and code that executes the process, where the code is described by using a high-level programming language;
a determining unit, configured to determine that service configuration information of the network apparatus corresponds to the code obtained by the first obtaining unit;
a compiling unit, configured to compile the code obtained by the first obtaining unit to generate compiled code; and
a loading unit, configured to load the compiled code generated by the compiling unit to the forwarding plane.

In a first possible implementation manner of the network apparatus provided by the second aspect, the network apparatus further includes:
a second obtaining unit, configured to obtain a location of a field that is to be matched by the forwarding plane of the network apparatus.

According to the first possible implementation manner of the network apparatus provided by the second aspect, in a second possible implementation manner of the network apparatus provided by the second aspect, the network apparatus further includes:
a translating unit, configured to translate the location that is of the field and obtained by the second obtaining unit to generate an instruction that triggers a search engine of the forwarding plane of the network apparatus to execute a matching operation.

According to the second aspect, or the first possible implementation manner of the network apparatus provided by the second aspect, or the second possible implementation manner of the network apparatus provided by the second aspect, in a third possible implementation manner of the network apparatus provided by the second aspect,
a variable in the code includes a value of a field in a packet or a value of a register.

According to the second aspect, or the first possible implementation manner of the network apparatus provided by the second aspect, or the second possible implementation manner of the network apparatus provided by the second aspect, or the third possible implementation manner of the network apparatus provided by the second aspect, in a fourth possible implementation manner of the network apparatus provided by the second aspect,
the code is used to access a function or a coprocessor.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a code loading method according to an embodiment of the present invention;
FIG. 2 is a schematic structural diagram of a network apparatus according to an embodiment of the present invention; and
FIG. 3 is a schematic structural diagram of a network apparatus according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

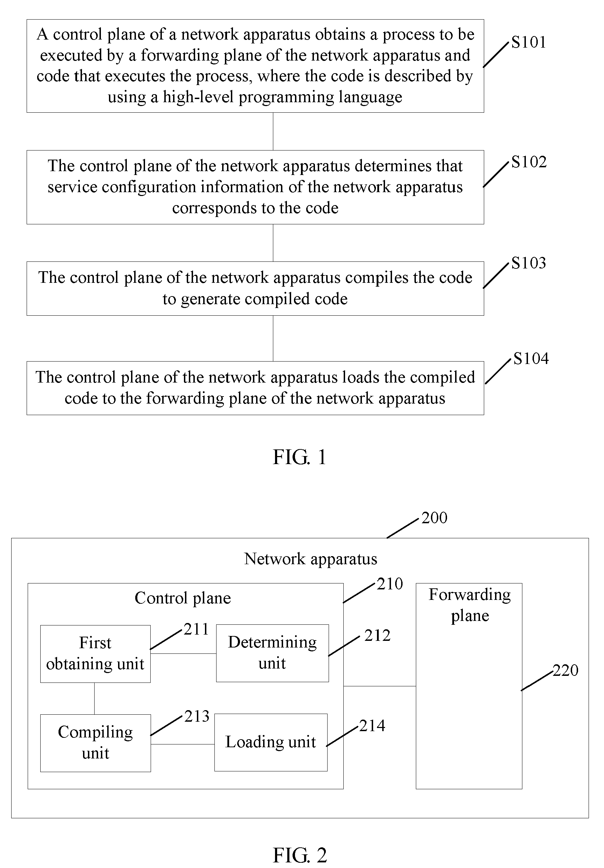

FIG. 1 is a schematic flowchart of a code loading method according to an embodiment of the present invention. The method is executed by a network apparatus. The network apparatus may be a router, a network switch, a packet transport network (packet transport network, PTN for short) device, a firewall, a load balancer, a data center, or a wavelength-division multiplexing (wavelength-division multiplexing, WDM for short) device. The network switch may be an OpenFlow switch (English: OpenFlow Switch). Referring to FIG. 1, the method includes:
S101: A control plane of a network apparatus obtains a process to be executed by a forwarding plane of the network apparatus and code that executes the process, where the code is described by using a high-level programming language.

For example, the control plane of the network apparatus may include a central processing unit (central processing unit, CPU for short).

For example, the forwarding plane of the network apparatus may include a network processor (network processor, NP for short).

For example, the control plane may be borne by a main control board (control board) of the network apparatus. The forwarding plane may be borne by an interface board (interface board) of the network apparatus.

For example, the high-level programming language may be Java or C++.

For example, the process may include at least one of following: executing a forwarding operation on a packet, executing a modification operation on a packet, calculating a checksum (checksum), subtracting one from a time to live value, executing a counting operation on a packet, executing a quality of service (quality of service, QoS for short) operation on a packet, executing an access control operation on a packet, and executing a dropping operation on a packet.

For example, executing the modification operation on a packet may be performing an encapsulation operation on the packet, or performing a decapsulation operation on the packet. The checksum may be a Transmission Control Protocol (transmission control protocol, TCP for short) checksum. The QoS operation may be a committed access rate (English: committed access rate, CAR for short) operation. Executing the access control operation on a packet may be implemented by using an access control list (access control list, ACL for short).

S102: The control plane of the network apparatus determines that service configuration information of the network apparatus corresponds to the code.

For example, the service configuration information is used to describe a service to be executed by the network apparatus.

For example, the service may be a forwarding service.

For example, the forwarding service may be a layer 3 virtual private network (layer 3 virtual private network, L3VPN for short) forwarding service, a layer 2 virtual private network (layer 2 virtual private network, L2VPN for short) forwarding service, a virtual private local area network service (virtual private LAN service, VPLS for short), a multiprotocol label switching (multiprotocol label switching, MPLS for short) forwarding service, an IP forwarding service, or a layer 2 switching (layer 2 switching) service.

For example, the service may be executed by using an interface of the network apparatus. For example, the service configuration information may be described as: the service is enabled for the interface. The interface may be a physical interface, or may be a logical interface. For example, the logical interface may be a trunk interface (trunk interface) or a virtual local area network interface (VLAN interface).

For example, the service configuration information may be generated by using a telnet. The service configuration information may also be generated by a network management system.

For example, in a scenario in which the network apparatus is the OpenFlow switch, the service configuration information may be generated by an OpenFlow controller. The OpenFlow controller may send the service configuration information to the OpenFlow switch by using a control channel (control channel).

For example, S102 may specifically include: determining, by the control plane of the network apparatus, a service corresponding to the service configuration information. The control plane of the network apparatus determines that the code is a computer program used to execute the service.

S103: The control plane of the network apparatus compiles the code to generate compiled code.

For example, S103 may specifically include: compiling, by the control plane of the network apparatus, the code by using a compiler (compiler) to generate the compiled code.

For example, the compiled code may include code in an assembly language, code in a machine language, an OpenFlow instruction (instruction), or an OpenFlow action (action). For example, the action may be Push-Tag (Push-Tag), Pop-Tag (Pop-Tag), Drop (Drop), Output (Output), or Group (Group). For the OpenFlow instruction or the OpenFlow action, refer to OpenFlow Switch Specification version 1.4.0 (OpenFlow Switch Specification version 1.4.0).

S104: The control plane of the network apparatus loads the compiled code to the forwarding plane of the network apparatus.

In the foregoing technical solutions, a control plane of a network apparatus obtains a process and code that executes the process. The control plane of the network apparatus determines that service configuration information corresponds to the code. The control plane of the network apparatus compiles the code to generate compiled code. The control plane of the network apparatus loads the compiled code to a forwarding plane of the network apparatus. A new service may be executed by the compiled code that is loaded to the forwarding plane of the network apparatus. Therefore, a new service may be deployed by using the foregoing technical solutions, which helps meet a requirement for a new service.

Optionally, the foregoing technical solutions may further include:
obtaining, by the control plane of the network apparatus, a location of a field that is to be matched by the forwarding plane of the network apparatus.

For example, the field may be a destination IP address in an IP header. For example, the field may be a destination IP address. For example, the field may be a source IP address, a destination IP address, a source port, a destination port, and a protocol (protocol). The source IP address, the destination IP address, and the protocol are information in the IP header. The source port and the destination port may be information in a TCP header or information in a User Datagram Protocol (user datagram protocol, UDP for short) header.

For example, the obtaining, by the control plane of the network apparatus, the location of the field may include: obtaining, by the control plane of the network apparatus, the location of the field by using an integrated development environment (integrated development environment, IDE for short).

For example, in a scenario in which the field is data in a register, the location may be an address of the register. In a scenario in which the field is a field in a packet, the location may be a starting location and a length that are of the field.

Optionally, S101 specifically includes:
obtaining, by the control plane of the network apparatus, the process and the code by using an IDE.

For example, S101 may include:
receiving, by the control plane of the network apparatus, input of a user by using the IDE to generate the code.

For example, the IDE may include a code editor (code editor). In addition, the IDE may further include a compiler, a debugger (debugger), and a graphical user interface (graphical user interface, GUI for short). The user may be an operator of the network apparatus. Specifically, the user may be an engineer of the operator.

For example, the user may provide the input for the control plane of the network apparatus by using a physical keyboard or a virtual keyboard. The virtual keyboard may be implemented by using the graphical user interface.

Optionally,
a variable in the code includes at least one of the following: a value of a field in a packet or a value of a register.

Optionally,
the code is used to access a function (function) or a coprocessor (coprocessor).

For example, the code includes a name of the function. For example, the code includes an instruction for accessing the coprocessor. For example, the coprocessor may be provided by a chip company. The chip company may be EZCHIP or CAVIUM.

Optionally, in the foregoing technical solutions, after the obtaining, by the control plane of the network apparatus, a location of a field that is to be matched by the forwarding plane of the network apparatus, the method further includes:
translating, by the control plane of the network apparatus, the location of the field to generate an instruction that triggers a search engine of the forwarding plane of the network apparatus to execute a matching operation.

For example, the control plane of the network apparatus may translates the location of the field by using a compiler to generate the instruction that triggers the search engine of the forwarding plane of the network apparatus to execute the matching operation.

Optionally, in the foregoing technical solutions, after S104, the method may further include:
receiving, by the forwarding plane of the network apparatus, a packet;
acquiring, by the search engine of the forwarding plane of the network apparatus, a search key (search key) from the packet and/or the register according to the location of the field;
executing, by the search engine of the forwarding plane of the network apparatus, a matching operation according to the search key;
determining, by the search engine of the forwarding plane of the network apparatus, that a result of the matching operation is a hit; and
executing, by the forwarding plane of the network apparatus, the process on the packet according to the compiled code.

For example, the packet may be an IP packet, an Ethernet frame (ethernet frame), or an MPLS protocol packet.

FIG. 2 is a schematic structural diagram of a network apparatus according to an embodiment of the present invention. A network apparatus 200 may be configured to execute the method shown in FIG. 1. The network apparatus may be a router, a network switch, a PTN device, a firewall, a load balancer, a data center, or a WDM device. The network switch may be an OpenFlow switch. Referring to FIG. 2, the network apparatus 200 includes: a control plane 210 and a forwarding plane 220.

The control plane 210 includes a first obtaining unit 211, a determining unit 212, a compiling unit 213, and a loading unit 214.

The first obtaining unit 211 is configured to obtain a process to be executed by the forwarding plane of the network apparatus and code that executes the process, where the code is described by using a high-level programming language.

For example, the control plane may be borne by a main control board of the network apparatus 200. The forwarding plane may be borne by an interface board of the network apparatus 200.

For example, the control plane 210 of the network apparatus 200 may include a CPU.

For example, the forwarding plane 220 of the network apparatus 200 may include anNP.

For example, the high-level programming language may be Java or C++.

For example, the process may include at least one of following: executing a forwarding operation on a packet, executing a modification operation on a packet, calculating a checksum, subtracting one from a time to live value, executing a counting operation on a packet, executing a QoS operation on a packet, executing an access control operation on a packet, and executing a dropping operation on a packet.

For example, executing the modification operation on a packet may be performing an encapsulation operation on the packet, or performing a decapsulation operation on the packet. The checksum may be a TCP checksum. The QoS operation may be a CAR operation. Executing the access control operation on a packet may be implemented by using an ACL.

The determining unit 212 is configured to determine that service configuration information of the network apparatus corresponds to the code obtained by the first obtaining unit 211.

For example, the service configuration information is used to describe a service to be executed by the network apparatus.

For example, the service may be a forwarding service.

For example, the forwarding service may be an L3VPN forwarding service, an L2VPN forwarding service, a VPLS, an MPLS forwarding service, an IP forwarding service, or a layer 2 switching service.

For example, the service may be executed by using an interface of the network apparatus. For example, the service configuration information may be described as: the interface enables the service. The interface may be a physical interface, or may be a logical interface. For example, the logical interface may be a trunk interface or a virtual local area network interface.

For example, the service configuration information may be generated by using a telnet. The service configuration information may also be generated by a network management system.

For example, in a scenario in which the network apparatus is the OpenFlow switch, the service configuration information may be generated by an OpenFlow controller. The OpenFlow controller may send the service configuration information to the OpenFlow switch by using a control channel.

For example, the determining unit 212 may specifically include a first unit and a second unit.

The first unit is configured to determine a service corresponding to the service configuration information.

The second unit is configured to determine that the code is a computer program used to execute the service.

The compiling unit 213 is configured to compile the code obtained by the first obtaining unit 211 to generate compiled code.

For example, the compiling unit 213 is specifically configured to compile, by using a compiler, the code obtained by the first obtaining unit 211 to generate the compiled code.

For example, the compiled code may include code in an assembly language, code in a machine language, an OpenFlow instruction, or an OpenFlow action. For example, the action may be Push-Tag, Pop-Tag, drop, output, or group. For the OpenFlow instruction or the OpenFlow action, refer to OpenFlow Switch Specification version 1.4.0 (OpenFlow Switch Specification version 1.4.0).

The loading unit 214 is configured to load the compiled code, generated by the compiling unit 213, to the forwarding plane 220.

Optionally, the control plane 210 of the network apparatus 200 shown in FIG. 2 may further include:
a second obtaining unit, configured to obtain a location of a field that is to be matched by the forwarding plane of the network apparatus.

For example, the field may be a destination IP address in an IP header. For example, the field may be a source IP address, a destination IP address, a source port, a destination port, and a protocol. The source IP address, the destination IP address, and the protocol are information in the IP header. The source port and the destination port may be information in a TCP header or information in a UDP header.

For example, the second obtaining unit is specifically configured to obtain the location of the field by using an IDE.

For example, in a scenario in which the field is data in a register, the location may be an address of the register. In a scenario in which the field is a field in a packet, the location may be a starting location and a length that are of the field.

Optionally, the first obtaining unit 211 is specifically configured to obtain the process and the code by using the IDE.

Optionally, the first obtaining unit 211 is specifically configured to receive input of a user by using the IDE to generate the code.

For example, the IDE may include a code editor. In addition, the IDE may further include a compiler, a debugger, and a GUI. The user may be an operator of the network apparatus. Specifically, the user may be an engineer of the operator.

For example, the user may provide the input for the control plane of the network apparatus by using a physical keyboard or a virtual keyboard. The virtual keyboard may be implemented by using the graphical user interface.

Optionally, the control plane 210 may further include:
a translating unit, configured to translate the location that is of the field and obtained by the second obtaining unit to generate an instruction that triggers a search engine of the forwarding plane of the network apparatus to execute a matching operation.

For example, the translating unit is specifically configured to translate the location of the field by using a compiler to generate the instruction that triggers the search engine of the forwarding plane of the network apparatus to execute the matching operation.

Optionally, in the foregoing technical solutions,
a variable in the code includes at least one of the following: a value of a field in a packet or a value of a register.

Optionally, in the foregoing technical solutions,
the code is used to access a function or a coprocessor.

For example, the code includes a name of the function. For example, the code includes an instruction for accessing the coprocessor. For example, the coprocessor may be provided by a chip company. The chip company may be EZCHIP or CAVIUM.

Optionally, in the foregoing technical solutions, the forwarding plane 220 may include:
a receiving unit, configured to receive a packet after the loading unit 214 loads the compiled code, generated by the compiling unit 213, to the forwarding plane 220;
a search engine, configured to acquire a search key from the packet and/or the register according to the location of the field; where
the search engine is further configured to execute a matching operation according to the search key; and
the search engine is further configured to determine that a result of the matching operation is a hit; and
a processing unit, configured to execute the process for the packet according to the compiled code.

For example, the packet may be an IP packet, an Ethernet frame, or an MPLS protocol packet.

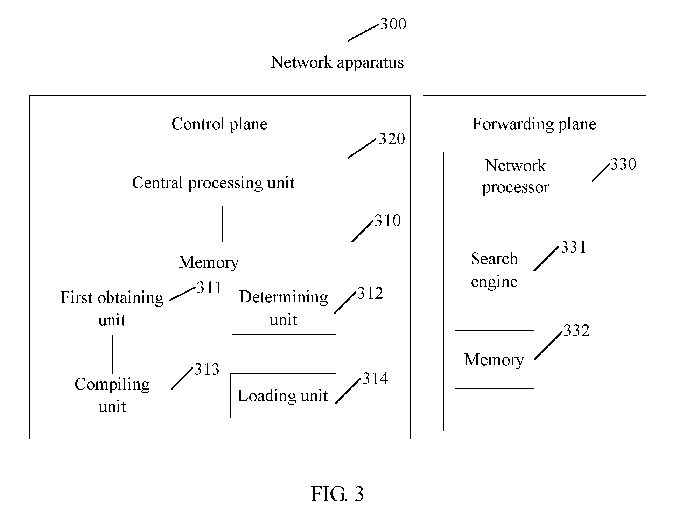

FIG. 3 is a schematic structural diagram of a network apparatus according to an embodiment of the present invention. The network apparatus may be a router, a network switch, a PTN device, a firewall, a load balancer, a data center, or a WDM device. The network switch may be an OpenFlow switch. A network apparatus 300 may be configured to execute the method shown in FIG. 1. The network apparatus 300 may be configured to implement the network apparatus 200 shown in FIG. 2. Referring to FIG. 3, the network apparatus 300 includes a memory 310, a central processing unit 320, and a network processor 330. The memory 310 is coupled to the central processing unit 320. The central processing unit 320 is coupled to the network processor 330. The memory 310 includes a computer program. The central processing unit 320 may execute the computer program by accessing the memory 310. The computer program includes a first obtaining unit 311, a determining unit 312, a compiling unit 313, and a loading unit 314. The network processor 330 includes a search engine 331 and a memory 332. The memory 310 and the central processing unit 320 are located in a control plane of the network apparatus 300. The network processor 330 is located in a forwarding plane of the network apparatus 300. The control plane is borne by a main control board of the network apparatus 300. The forwarding plane is borne by an interface board of the network apparatus 300.

The first obtaining unit 311 is configured to obtain a process to be executed by the forwarding plane of the network apparatus and code that executes the process, where the code is described by using a high-level programming language.

For example, the high-level programming language may be Java or C++.

For example, the process may include at least one of following: executing a forwarding operation on a packet, executing a modification operation on a packet, calculating a checksum, subtracting one from a time to live value, executing a counting operation on a packet, executing a QoS operation on a packet, executing an access control operation on a packet, and executing a dropping operation on a packet.

For example, executing the modification operation on a packet may be performing an encapsulation operation on the packet, or performing a decapsulation operation on the packet. The checksum may be a TCP checksum. The QoS operation may be a CAR operation. Executing the access control operation on a packet may be implemented by using an ACL.

The determining unit 312 is configured to determine that service configuration information of the network apparatus corresponds to the code obtained by the first obtaining unit 311.

For example, the service configuration information is used to describe a service to be executed by the network apparatus.

For example, the service may be a forwarding service.

For example, the forwarding service may be an L3VPN forwarding service, an L2VPN forwarding service, a VPLS, an MPLS forwarding service, an IP forwarding service, or a layer 2 switching service.

For example, the service may be executed by using an interface of the network apparatus. For example, the service configuration information may be described as: the service is enabled for the interface. The interface may be a physical interface, or may be a logical interface. For example, the logical interface may be a trunk interface or a virtual local area network interface.

For example, the service configuration information may be generated by using a telnet. The service configuration information may also be generated by a network management system.

For example, in a scenario in which the network apparatus is the OpenFlow switch, the service configuration information may be generated by an OpenFlow controller.

For example, the determining unit 312 may specifically include a first unit and a second unit.

The first unit is configured to determine a service corresponding to the service configuration information.

The second unit is configured to determine that the code is a computer program used to execute the service.

The compiling unit 313 is configured to compile the code obtained by the first obtaining unit 311 to generate compiled code.

For example, the compiling unit 313 is specifically configured to compile, by using a compiler, the code obtained by the first obtaining unit 311 to generate the compiled code.

For example, the compiled code may include code in an assembly language, code in a machine language, an OpenFlow instruction, or an OpenFlow action. For example, the action may be Push-Tag, Pop-Tag, Drop, Output, or Group. For the OpenFlow instruction or the OpenFlow action, refer to OpenFlow Switch Specification version 1.4.0 (OpenFlow Switch Specification version 1.4.0).

The loading unit 314 is configured to load the compiled code, generated by the compiling unit 313, to the forwarding plane of the network apparatus. Specifically, the compiled code is loaded to the memory 332 in the network processor 330.

Optionally, the memory 310 in the network apparatus 300 shown in FIG. 3 may further include:
a second obtaining unit, configured to obtain a location of a field that is to be matched by the forwarding plane of the network apparatus.

For example, the field may be a destination IP address in an IP header. For example, the field may be a source IP address, a destination IP address, a source port, a destination port, and a protocol. The source IP address, the destination IP address, and the protocol are information in the IP header. The source port and the destination port may be information in a TCP header or information in a UDP header.

For example, the second obtaining unit is specifically configured to obtain the location of the field by using an IDE.

For example, in a scenario in which the field is data in a register, the location may be an address of the register. In a scenario in which the field is a field in a packet, the location may be a starting location and a length that are of the field.

Optionally, the first obtaining unit 311 is specifically configured to obtain the process and the code by using the IDE.

Optionally, the first obtaining unit 311 is specifically configured to receive input of a user by using the IDE to generate the code.

For example, the IDE may include a code editor. In addition, the IDE may further include a compiler, a debugger, and a GUI. The user may be an operator of the network apparatus. Specifically, the user may be an engineer of the operator.

For example, the user may provide the input for the control plane of the network apparatus by using a physical keyboard or a virtual keyboard. The virtual keyboard may be implemented by using the graphical user interface.

Optionally, the memory 310 may further include:
a translating unit, configured to translate the location that is of the field and obtained by the second obtaining unit to generate an instruction that triggers a search engine of the forwarding plane of the network apparatus to execute a matching operation.

For example, the translating unit is specifically configured to translate the location of the field by using a compiler to generate the instruction that triggers the search engine of the forwarding plane of the network apparatus to execute the matching operation.

Optionally, in the foregoing technical solutions,
a variable in the code includes at least one of the following: a value of a field in a packet or a value of a register.

Optionally, in the foregoing technical solutions,
the code is used to access a function or a coprocessor.

For example, the code includes a name of the function. For example, the code includes an instruction for accessing the coprocessor. For example, the coprocessor may be provided by a chip company. The chip company may be EZCHIP or CAVIUM.

Optionally, in the foregoing technical solutions, the network processor 330 may include:
a receiving unit, configured to receive a packet after the loading unit 314 loads the compiled code, generated by the compiling unit 313, to the forwarding plane; for example, the receiving unit may be a receiver; and
a search engine 331, configured to acquire a search key from the packet and/or the register according to the location of the field; where
the search engine 331 is further configured to execute a matching operation according to the search key; and
the search engine 331 is further configured to determine that a result of the matching operation is a hit.

The memory 332 further includes a processing unit.

The processing unit is configured to execute the process on the packet according to the compiled code.

The processing unit may be the compiled code.

For example, the packet may be an IP packet, an Ethernet frame, or an MPLS protocol packet.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store a computer program, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A code loading method, comprising:
obtaining, by a control plane of a network apparatus, a process to be executed by a forwarding plane of the network apparatus and code that executes the process, wherein the code is described by using a high-level programming language;
determining, by the control plane of the network apparatus, that service configuration information of the network apparatus corresponds to the code;
compiling, by the control plane of the network apparatus, the code to generate compiled code; and
loading, by the control plane of the network apparatus, the compiled code to the forwarding plane of the network apparatus.

2. The method according to claim 1, wherein the method further comprises:
obtaining, by the control plane of the network apparatus, a location of a field that is to be matched by the forwarding plane of the network apparatus.

3. The method according to claim 2, wherein
after the obtaining, by the control plane of the network apparatus, a location of a field that is to be matched by the forwarding plane of the network apparatus, the method further comprises:
translating, by the control plane of the network apparatus, the location of the field to generate an instruction that triggers a search engine of the forwarding plane of the network apparatus to execute a matching operation.

4. The method according to any one of claims 1 to 3, wherein
a variable in the code comprises a value of a field in a packet or a value of a register.

5. The method according to any one of claims 1 to 4, wherein
the code is used to access a function or a coprocessor.

6. A network apparatus, comprising: a control plane and a forwarding plane; wherein
the control plane comprises:
a first obtaining unit, configured to obtain a process to be executed by the forwarding plane of the network apparatus and code that executes the process, wherein the code is described by using a high-level programming language;
a determining unit, configured to determine that service configuration information of the network apparatus corresponds to the code obtained by the first obtaining unit;
a compiling unit, configured to compile the code obtained by the first obtaining unit to generate compiled code; and
a loading unit, configured to load the compiled code generated by the compiling unit to the forwarding plane.

7. The network apparatus according to claim 6, further comprising:
a second obtaining unit, configured to obtain a location of a field that is to be matched by the forwarding plane of the network apparatus.

8. The network apparatus according to claim 7, further comprising:
a translating unit, configured to translate the location that is of the field and obtained by the second obtaining unit to generate an instruction that triggers a search engine of the forwarding plane of the network apparatus to execute a matching operation.

9. The network apparatus according to any one of claims 6 to 8, wherein
a variable in the code comprises a value of a field in a packet or a value of a register.

10. The network apparatus according to any one of claims 6 to 9, wherein
the code is used to access a function or a coprocessor.
